# EUROPEAN PATENT SPECIFICATION

(11) **EP 4 435 575 B1**
(45) Date of publication and mention of the grant of the patent: **05.11.2025**
(21) Application number: 23743395.8
(22) Date of filing: 09.01.2023
(51) Int. Cl.: G06F 3/0484, G06F 3/0346, G06F 1/16, G06F 3/14

(54) **FOLDABLE DEVICE AND METHOD FOR OPERATING SAME**
FALTBARE VORRICHTUNG UND VERFAHREN ZUM BETREIBEN EINER FALTBAREN VORRICHTUNG
DISPOSITIF PLIABLE ET SON PROCÉDÉ DE FONCTIONNEMENT

(30) Priority: 18.01.2022 KR 20220007352
(43) Date of publication of application: 25.09.2024
(73) Proprietor: Samsung Electronics Co., Ltd., Suwon-si, Gyeonggi-do 16677 (KR)
(72) Inventor: PEDAN, Stanislav, Suwon-si, Gyeonggi-do 16677 (KR); KOPYSOV, Oleg, Suwon-si, Gyeonggi-do 16677 (KR); POPOV, Oleksandr, Suwon-si, Gyeonggi-do 16677 (KR); CHALYI, Oleksandr, Suwon-si, Gyeonggi-do 16677 (KR); ASTRAKHANTSEV, Andrii, Suwon-si, Gyeonggi-do 16677 (KR)
(74) Representative: Appleyard Lees IP LLP
(86) International application number: PCT/KR2023/000348
(87) International publication number: WO 2023/140546

(56) References cited:
- KR-A- 20120 020 006
- KR-B1- 101 403 795
- KR-B1- 101 686 741
- KR-B1- 102 104 123
- KR-B1- 102 300 151
- US-A1- 2021 089 081

## Description

### Technical Field

Various embodiments relate to a foldable device and an operation method thereof, and more particularly, to a device and method for providing an application or content based on a user input for unfolding a foldable device.

### Background Art

With recent advancements in portable device technology, the use of foldable devices has been increasing. A display of a foldable device can be folded or unfolded, making it highly portable while simultaneously providing a large screen.

Furthermore, as artificial intelligence (Al) technology has evolved, there has been a growing need for recommendations of content tailored to a user who uses a device or a user's situation. For example, there have been an increasing need to identify a user using a device and a user's situation and to automatically recommend content appropriate for the user and the user's situation.

Accordingly, a method of providing content suitable for a user by using the characteristics of foldable devices is required. In this field, background disclosures include patent publication US2021/089081 A1.

### Disclosure

### Technical Solution

According to an aspect of the present disclosure, there is provided a method of executing an application as set out in accompanying claim 1.

According to an aspect of the present disclosure, there is provided a foldable device as set out accompanying claim 11.

According to an aspect of the present disclosure, a computer-readable recording medium is provided, as set out in accompanying claim 15.

### Description of Drawings

FIG. 1 illustrates a method, performed by a foldable device, of providing an application based on a user input for unfolding the foldable device, according to an embodiment of the present disclosure.
FIG. 2 is a flowchart of a method, performed by a foldable device, of providing an application based on a user input for unfolding the foldable device, according to an embodiment of the present disclosure.
FIG. 3 illustrates a method, performed by a foldable device, of identifying a user from motion sensor values based on an artificial intelligence (AI) model, according to an embodiment of the present disclosure.
FIG. 4 illustrates a method, performed by a foldable device, of providing an application based on a user account corresponding to a user who has unfolded the foldable device, according to an embodiment of the present disclosure.
FIGS. 5A and 5B illustrate a method, performed by a foldable device, of restricting execution of an application according to a user unfolding the foldable device, according to an embodiment of the present disclosure.
FIG. 6 illustrates a method, performed by a foldable device, of changing displayed content according to a user, according to an embodiment of the present disclosure.
FIG. 7 is a flowchart of a method, performed by a foldable device, of unlocking the foldable device according to a user unfolding the foldable device, according to an embodiment of the present disclosure.
FIG. 8 illustrates a method, performed by a foldable device, of unlocking the foldable device according to a user unfolding the foldable device, according to an embodiment of the present disclosure.
FIG. 9 is a flowchart of a method, performed by a foldable device, of providing an application based on a movement state of a user, according to an embodiment of the present disclosure.
FIG. 10 illustrates a method, performed by a foldable device, of identifying a movement state of a user based on sensor values from a motion sensor of the foldable device, according to an embodiment of the present disclosure.
FIG. 11 illustrates a method, performed by a foldable device, of providing an application based on a movement state of a user, according to an embodiment of the present disclosure.
FIG. 12 is a flowchart of a method, performed by a foldable device, of executing an application based on a pose and placement of the foldable device, according to an embodiment of the present disclosure.
FIG. 13 illustrates a method, performed by a foldable device, of executing an application based on a pose and placement of the foldable device, according to an embodiment of the present disclosure.
FIG. 14 illustrates a flowchart of a method, performed by a foldable device, of establishing a short-range communication connection between a plurality of foldable devices based on a user input for unfolding the foldable device, according to an embodiment of the present disclosure.
FIG. 15 illustrates a method, performed by a foldable device, of establishing a short-range communication connection with another foldable device based on a user input for unfolding the foldable device, according to an embodiment of the present disclosure.
FIG. 16 illustrates a method, performed by a foldable device, of executing an application according to a user's surrounding environment, according to an embodiment of the present disclosure.
FIG. 17 illustrates a method, performed by a foldable device, of training an Al model, according to an embodiment of the present disclosure.
FIG. 18 is a block diagram of a foldable device according to an embodiment of the present disclosure.

### Mode for Invention

Throughout the present disclosure, the expression "at least one of a, b or c" indicates only a, only b, only c, both a and b, both a and c, both b and c, all of a, b, and c, or variations thereof.

Embodiments of the present disclosure will be described more fully hereinafter with reference to the accompanying drawings so that they may be easily implemented by one of ordinary skill in the art. However, the present disclosure may be implemented in different forms and should not be construed as being limited to the embodiments thereof set forth herein. Furthermore, parts not related to descriptions of the present disclosure are omitted to clearly explain the present disclosure in the drawings, and like reference numerals denote like elements throughout.

As the terms used herein, general terms that are currently widely used are selected by taking into account functions in the present disclosure, but the terms may mean various other terms according to an intention of one of ordinary skill in the art, precedent cases, advent of new technologies, etc. Thus, the terms used herein should be defined not by simple appellations thereof but based on the meaning of the terms together with the overall description of the present disclosure.

Furthermore, although the terms such as "first", "second", etc. may be used herein to describe various elements or components, these elements or components should not be limited by the terms. The terms are only used to distinguish one element or component from another element or component.

In addition, the terms used herein are only used to describe particular embodiments, and are not intended to limit the present disclosure. Singular expressions used herein are intended to include plural expressions as well unless the context clearly indicates otherwise. Furthermore, throughout the specification, it will be understood that when a part is referred to as being "connected" or "coupled" to another part, it may be directly connected to or electrically coupled to the other part with one or more intervening elements therebetween. Furthermore, throughout the specification, when a part "includes" or "comprises" an element, unless there is a particular description contrary thereto, it is understood that the part may further include other elements, not excluding the other elements.

Expressions such as "in some embodiments" or "in an embodiment" described in various parts of this specification do not necessarily refer to the same embodiment(s).

Hereinafter, the present disclosure will be described in detail with reference to the attached drawings.

Embodiments of the present disclosure are intended to identify a user who uses a foldable device and provide an application or content suitable for the user.

Furthermore, embodiments of the present disclosure are intended to restrict use by users who are not registered users of a foldable device.

Furthermore, embodiments of the present disclosure are intended to provide a device and operation method thereof capable of more easily and securely performing pairing between foldable devices.

In addition, embodiments of the present disclosure are intended to provide an application or content suitable for a situation of a user of a foldable device.

Technical problems to be solved will not be limited to those described above, and other technical problems may exist.

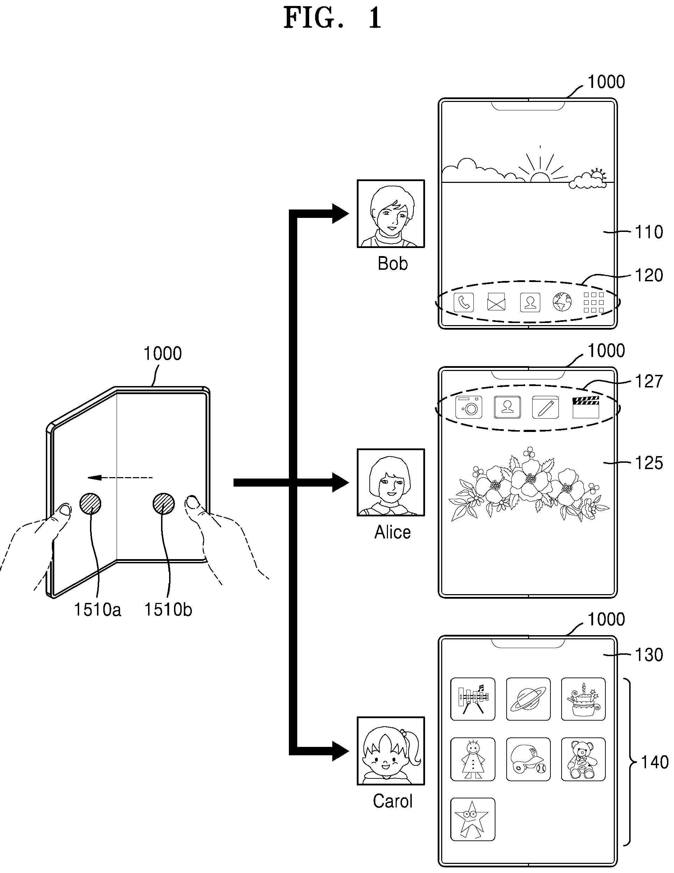

FIG. 1 illustrates a method, performed by a foldable device 1000, of providing an application based on a user input for unfolding the foldable device 1000, according to an embodiment of the present disclosure.

Referring to FIG. 1, the foldable device 1000 may identify a user who has unfolded the foldable device 1000 based on a sensor value when the foldable device 1000 is unfolded.

The foldable device 1000 may refer to a device that can be folded. According to an embodiment, the foldable device 1000 may include one display panel that can be folded in half. Also, according to another embodiment, the foldable device 1000 may include two display panels with a hinge in the center.

Furthermore, the foldable device 1000 may include a hinge (not shown) at a folded portion, and gears (not shown) may be attached to the hinge so that the foldable device 1000 may be unfolded in stages.

In addition, the foldable device 1000 may include at least one motion sensor 1510a and 1510b. The motion sensors 1510a and 1510b may include, but are not limited to, an accelerometer, a gyroscope, a magnetometer, a compass, a global positioning system (GPS), a band sensor, and a proximity sensor. Although the two motion sensors 1510a and 1510b are shown in FIG. 1, there may be one motion sensor or three or more motion sensors. Furthermore, a motion sensor may be provided at a top or bottom of the foldable device 1000 rather than in the center. In addition, the motion sensor may be provided on a side of the foldable device 1000 away from the folded portion of the foldable device 1000.

According to an embodiment, in response to receiving a user input for unfolding the foldable device 1000, the foldable device 1000 may identify a user who has unfolded the foldable device 1000 from among a plurality of users registered with the foldable device 1000, based on sensor values from the motion sensors 1510a and 1510b when the foldable device 1000 is unfolded.

For example, the foldable device 1000 may use a pre-trained artificial intelligence (AI) model to identify a user who has unfolded the foldable device 1000 based on a value output when sensor values from the motion sensors 1510a and 1510b are fed as an input to the Al model.

When identifying the user who has unfolded the foldable device 1000, the foldable device 1000 may provide an application or content for the foldable device 1000 based on a profile of the identified user.

For example, the foldable device 1000 may store a user's profile settings corresponding to the user. Accordingly, the foldable device 1000 may provide an application or content for the foldable device 1000 based on profile settings of the identified user.

Referring to FIG. 1, the foldable device 1000 may store profile settings for Bob, Alice, and Carol respectively corresponding to Bob, Alice, and Carol. Profile settings may include, but are not limited to, a home screen image, a list of contents displayed on the home screen, placement of applications, an icon size, and a text size, and selectable content.

When the foldable device 1000 is unfolded by Bob, the foldable device 1000 may identify the user who has unfolded the foldable device 1000 as being Bob based on sensor values from the motion sensors 1510a and 1510b when the foldable device 1000 is unfolded, and display a home screen image 110 and icons of home applications 120 based on Bob's profile settings.

Furthermore, when the foldable device 1000 is unfolded by Alice, the foldable device 1000 may identify the user who has unfolded the foldable device 1000 as being Alice, and display a home screen image 125 and icons of home applications 127 based on Alice's profile settings.

In addition, when the foldable device 1000 is unfolded by Carol, the foldable device 1000 may identify the user who has unfolded the foldable device 1000 as being Carol, and display a home screen image 130 and icons of kids applications 140 based on Carol's profile settings.

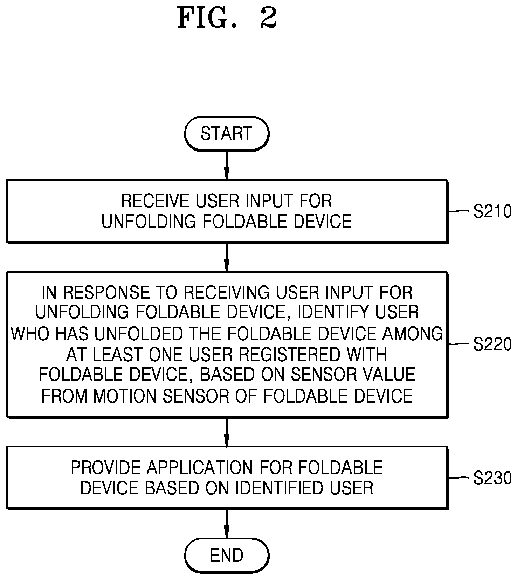

FIG. 2 is a flowchart of a method, performed by the foldable device 1000, of providing an application based on a user input for unfolding the foldable device 1000, according to an embodiment of the present disclosure.

In operation S210, the foldable device 1000 receives a user input for unfolding the foldable device 1000.

The foldable device 1000 receives a user input for unfolding the foldable device 1000 via a motion sensor.

In operation S220, in response to receiving the user input for unfolding the foldable device 1000, the foldable device 1000 identifies, based on sensor values from the motion sensor of the foldable device 1000, a user who has unfolded the foldable device 1000 from among a plurality of users registered with the foldable device 1000.

For example, the foldable device 1000 may calculate motion feature values of the foldable device 1000 based on sensor values from the motion sensor over time when the foldable device 1000 is unfolded. Furthermore, the foldable device 1000 may identify a user, who is output by a pre-trained Al model by inputting the calculated motion features as input values to the pre-trained Al model, as being the user who has unfolded the foldable device 1000.

In addition, according to an embodiment, the foldable device 1000 may transmit the calculated motion feature values to an external server (not shown), request the external server for identification information of a user who has unfolded the foldable device 1000, and receive the identification information of the user who has unfolded the foldable device 1000 from the external server. In this case, the external server may determine the user who has unfolded the foldable device 1000 by using an Al model.

In operation S230, the foldable device 1000 provides an application for the foldable device 1000 based on the identified user.

For example, the foldable device 1000 may obtain a list of applications stored in the foldable device 1000 and corresponding to the identified user. Furthermore, the foldable device 1000 may display the obtained list of applications when the foldable device 1000 is unfolded.

In another example, the foldable device 1000 may restrict the execution of some of a plurality of applications based on the identified user.

According to an embodiment, in response to a user input for displaying a plurality of contents, the foldable device 1000 may determine content corresponding to the identified user among the plurality of contents, and display the determined content.

According to an embodiment, in response to receiving a user input for unfolding the foldable device 1000, the foldable device 1000 may determine, based on sensor values from the motion sensor of the foldable device 1000, whether the user who has unfolded the foldable device 1000 is one of at least one user registered with the foldable device 1000. Furthermore, the foldable device 1000 may unlock the foldable device 1000 in response to determining that the user who has unfolded the foldable device 1000 is one of the at least one user registered with the foldable device 1000.

According to an embodiment, in response to receiving a user input for unfolding the foldable device 1000, the foldable device 1000 may identify a movement state of the user based on sensor values from the motion sensor of the foldable device 1000. Furthermore, the foldable device 1000 may obtain an execution image of at least one application corresponding to the movement state of the user. In addition, when the foldable device 1000 is unfolded, the foldable device 1000 may display the obtained execution image of the at least one application along with a list of applications.

According to an embodiment, the movement state may include, but is not limited to, a state in which the user is standing, a state in which the user is lying down, and a state in which the user is walking.

According to an embodiment, the foldable device 1000 may identify a pose and placement of the foldable device 1000 based on sensor values from the motion sensor. Furthermore, the foldable device 1000 may change displayed content or application based on the identified pose and placement of the foldable device 1000.

According to an embodiment, in response to receiving a user input for unfolding the foldable device 1000, the foldable device 1000 may determine, based on sensor values from the motion sensor of the foldable device 1000, whether the user who has unfolded the foldable device 1000 is a user registered with the foldable device 1000. Furthermore, in response to determining that the user who has unfolded the foldable device 1000 is not a user registered with the foldable device 100, the foldable device 1000 may display an authentication information entry page asking whether to establish a short-range communication connection with a nearby device. Furthermore, in response to receiving a user input for establishing the short-range communication connection with the nearby device via the authentication information entry page, the foldable device 1000 may broadcast an advertisement packet requesting the short-range communication connection to the nearby device.

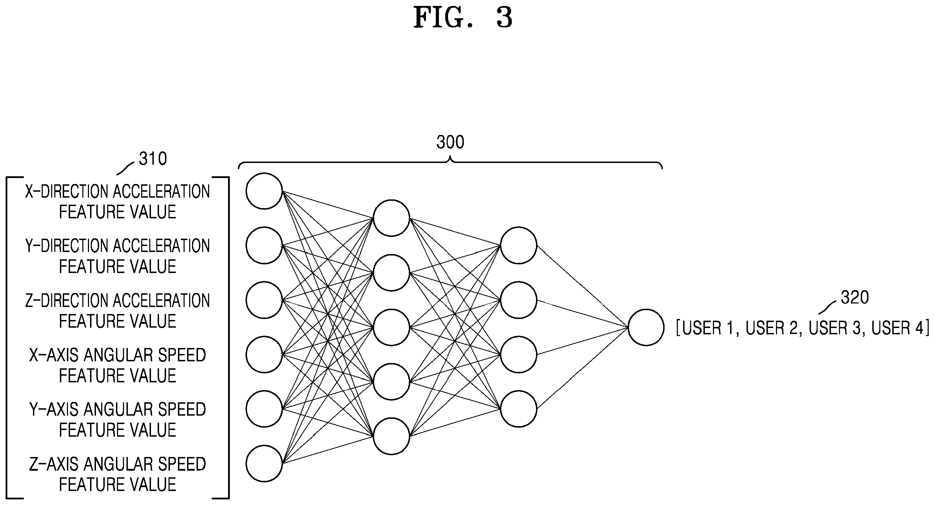

FIG. 3 illustrates a method, performed by the foldable device 1000, of identifying a user from values of a motion sensor thereof based on an Al model, according to an embodiment of the present disclosure.

Referring to FIG. 3, the foldable device 1000 may be equipped with a module for identifying a user from motion features based on an Al model 300.

The Al model 300 may be trained to select an output vector 320 representing a user who has unfolded the foldable device 1000 among registered users when motion features of the foldable device 1000 are input as an input vector 310.

The motion features of the foldable device 1000 may include at least one of a statistical value of sensor values or a coefficient value of a spectrum of the sensor values. For example, a motion feature of the foldable device 1000 may be a mean, a standard deviation, a variance, or a fast Fourier transform (FFT) coefficient of sensor values over time. For example, a z-direction acceleration feature value shown in FIG. 3 may be a mean of changes in z-direction accelerometer values over time when the foldable device 1000 is unfolded.

In addition, although FIG. 3 illustrates that all detected motion sensor values may be used to calculate the input vector of the Al model 300, according to an embodiment, only some of the sensor values may be used to calculate the input vector of the Al model 300. For example, among sensor values of the accelerometer, only z-direction sensor values may be used to calculate the input vector of the Al model 300.

The output vector 320 of the Al model 300 may be a probability vector representing probabilities respectively corresponding to the registered users. The foldable device 1000 may determine, based on the output vector 320, a user who has unfolded the foldable device 1000 among the plurality of registered users. For example, the foldable device 1000 may determine a user whose probability value is greater than or equal to a reference value, from among probability values respectively corresponding to the registered users, as being the user who has unfolded the foldable device 1000.

Furthermore, when there is no user whose probability value is greater than or equal to the reference value among the respective probability values for the registered users, the foldable device 1000 may determine that the user who has unfolded the device is not a user registered with the foldable device 1000.

According to an embodiment, an external server (not shown) may be provided with a module for identifying a user from motion features based on the Al model 300, and the foldable device 1000 may transmit motion feature values to the external server and receive identification information of the identified user from the external server.

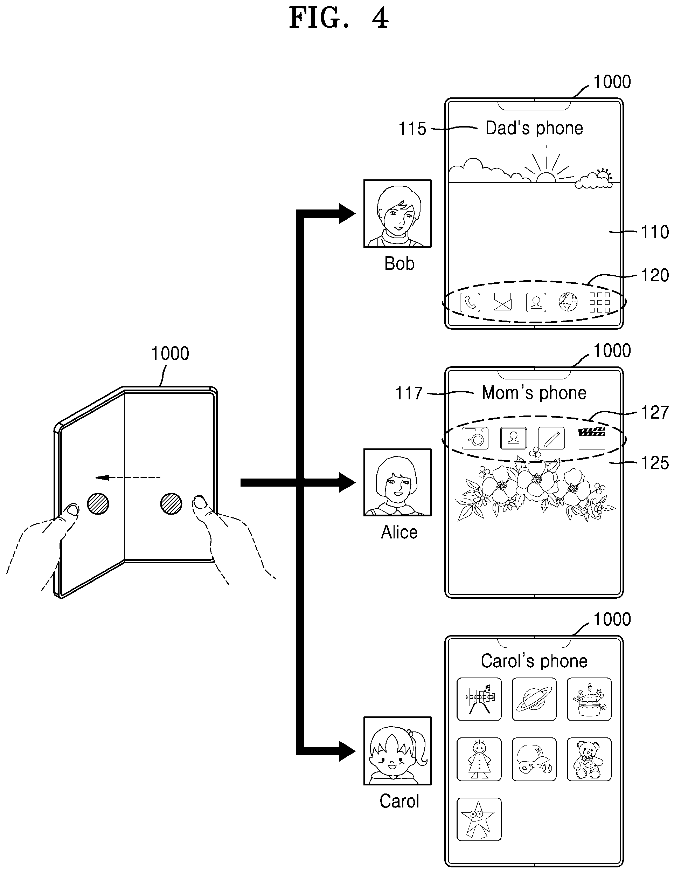

FIG. 4 illustrates a method, performed by the foldable device 1000, of providing an application based on a user account corresponding to a user who has unfolded the foldable device 1000, according to an embodiment of the present disclosure.

Referring to FIG. 4, at least one user account may be registered with the foldable device 1000. Furthermore, the foldable device 1000 may store profile settings for the foldable device 1000 corresponding to each of the at least one user account. Profile settings for the foldable device 1000 may include, but are not limited to, a list of applications installed by a user, a list of home applications set by the user, settings entered by the user, a list of contents created by the user, or a list of contents played by the user.

The foldable device 1000 may identify a user who has unfolded the foldable device 1000, obtain a user account corresponding to the identified user, and run the foldable device 1000 based on profile settings corresponding to the obtained user account.

Furthermore, according to an embodiment, when the foldable device 1000 is unfolded, the foldable device 1000 may display the user account of the identified user, receive a user input for selecting a confirmation button or entering authentication information, and operate the foldable device 1000 based on profile settings corresponding to the user account, based on the user input for inputting the confirmation button or whether the authentication information matches authentication information of the identified user.

Referring to FIG. 4, as Bob unfolds the foldable device 1000, the foldable device may identify a user who has unfolded the foldable device as Bob among a plurality of users, based on motion sensor values when the foldable device 1000 is unfolded. Furthermore, the foldable device 1000 may run the foldable device 1000 based on profile settings corresponding to Bob's user account. For example, the foldable device 1000 may display a first image 110 as a home background image and display icons 120 for a phone app, a text messaging app, a contacts app, an Internet app, and a gaming app on top of the first image 110. Furthermore, the foldable device 1000 may display text 115 or an image indicating that the foldable device 1000 is running under the Bob's user account.

Furthermore, as Alice unfolds the foldable device 1000, the foldable device 1000 may display, based on an Alice's user account, a second image 125 as a home background image and display icons 127 for a camera app, a photo app, a memo app, and a video app on top of the second image 125. In addition, the foldable device 1000 may display text 117 or an image indicating that the foldable device 1000 is running under the Alice's user account.

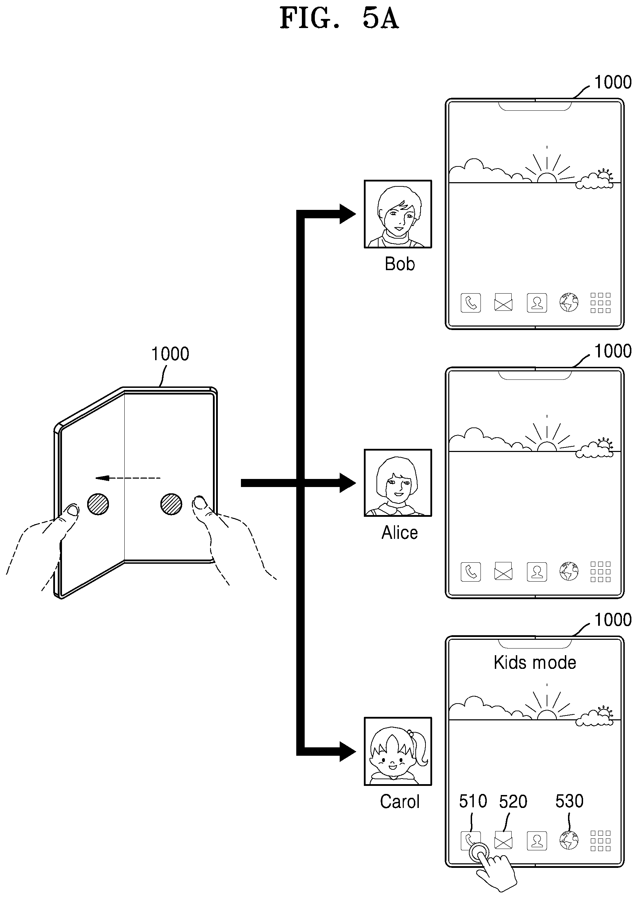

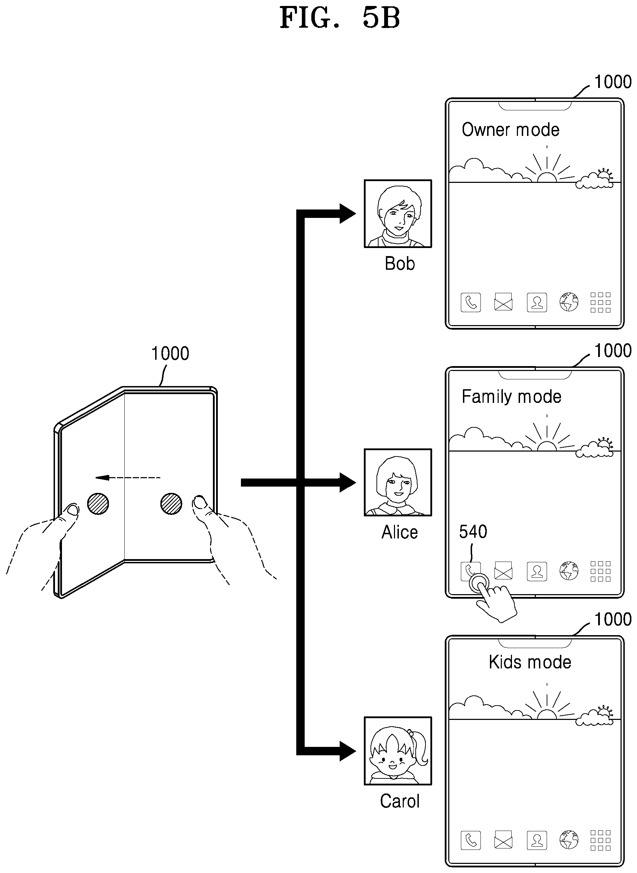

FIGS. 5A and 5B illustrate a method, performed by the foldable device 1000, of restricting execution of an application based on a user unfolding the foldable device 1000, according to an embodiment of the present disclosure.

Referring to FIGS. 5A and 5B, the foldable device 1000 may restrict execution of applications according to an identified user.

For example, referring to FIG. 5A, the foldable device 1000 may determine that the user who has unfolded the foldable device 1000 is Carol. Furthermore, the foldable device 1000 may store kids mode settings corresponding to identification information of Carol. In addition, restrictions on execution of a phone app, a text messaging app, and an Internet app may be set in correspondence to the kids mode settings.

In response to determining that the user who has unfolded the foldable device 1000 is Carol, even when receiving a user input for selecting a phone app 510, a text messaging app 520, or an Internet app 530, the foldable device 1000 may not execute the phone app, the text messaging app, or the Internet app. Furthermore, when receiving a user input for executing the phone app, the text messaging app, or the Internet app, the foldable device 1000 may display a notification message indicating that it is in kids mode.

Also, for example, referring to FIG. 5B, the foldable device 1000 may store Bob, Alice, and Carol as registered users, and may store an owner mode corresponding to identification information of Bob.

The foldable device 1000 may store identification information for a phone app, a banking app, and a social networking service (SNS) app as applications that may be executed only when the owner mode is set. Furthermore, restrictions on changing device settings may be stored in correspondence to a mode other than the owner mode. The device settings may include, but are not limited to, password settings, communication settings, or mode settings.

After identifying the user who has unfolded the foldable device 1000 as Alice, in response to receiving a user input for selecting a phone app, the foldable device 1000 may determine whether it is in owner mode, and when determining that it is not in the owner mode, the foldable device 1000 may not execute the phone app 540.

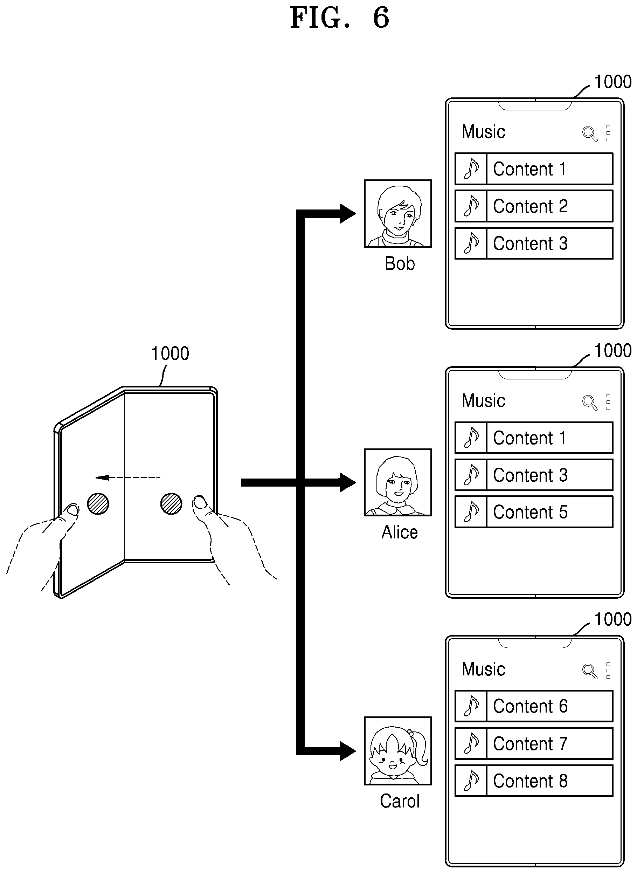

FIG. 6 illustrates a method, performed by the foldable device 1000 of changing displayed content according to a user, according to an embodiment of the present disclosure.

Referring to FIG. 6, in response to identifying a user, the foldable device 1000 may provide content corresponding to the identified user.

According to an embodiment, the foldable device 1000 may obtain a list of contents stored in correspondence to identification information of the user and display the obtained list of contents. For example, if the foldable device 1000 only stores a list of family members' phone numbers corresponding to identification information of Carol, the foldable device 1000 may display only the list of family members' phone numbers in response to identifying Carol as the user who has unfolded the foldable device 1000 and receiving a user input for selecting the list of phone numbers.

Furthermore, in response to receiving a user input for selecting an application, the foldable device 1000 may obtain account information of the application corresponding to the user who has unfolded the foldable device 1000, and display a list of contents selected by the user by executing the application based on the obtained account information.

For example, referring to FIG. 6, even when the same application is selected, content 1, content 2, and content 3 may be displayed when the user who has unfolded the foldable device 1000 is Bob, content 1, content 3, and content 5 may be displayed when the user who has unfolded the foldable device 1000 is Alice, and content 6, content 7, and content 8 may be displayed when the user who has unfolded the foldable device 1000 is Carol.

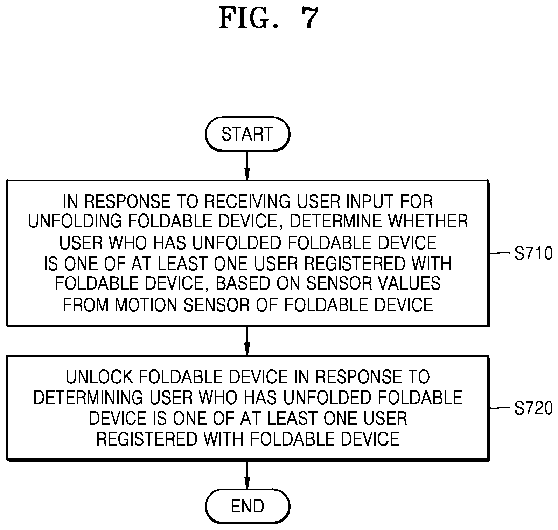

FIG. 7 is a flowchart of a method, performed by the foldable device 1000, of unlocking the foldable device 1000 according to a user unfolding the foldable device 1000, according to an embodiment of the present disclosure.

In operation S710, in response to receiving a user input for unfolding the foldable device 1000, the foldable device 1000 may determine, based on sensor values from a motion sensor of the foldable device 1000, whether the user who has unfolded the foldable device 1000 is one of at least one user registered with the foldable device 1000.

For example, the foldable device 1000 may calculate a motion feature vector based on motion sensor values when the foldable device 1000 is unfolded, input the calculated motion feature vector as an input vector of a pre-trained Al model, and determine, based on an output vector of the pre-trained Al model, whether the user who has unfolded the foldable device 1000 is one of the at least one user registered with the foldable device 1000. For example, when there is a probability value greater than or equal to a reference value from among probability values respectively corresponding to the registered users, the foldable device 1000 may determine that the user who has unfolded the foldable device 1000 is one of the at least one user registered with the foldable device 1000.

When there is no user whose probability value is greater than or equal to the reference value among the respective probability values for the registered users, the foldable device 1000 may determine that the user who has unfolded the device is not a user registered with the foldable device 1000.

In operation S720, the foldable device 1000 may unlock the foldable device 1000 in response to determining that the user who has unfolded the foldable device 1000 is one of the at least one user registered with the foldable device 1000.

Locking the foldable device 1000 being locked may refer to entering a state in which only an authenticated user is allowed to receive authentication information via an authentication user interface (UI) so that only the authenticated user may use the foldable device 1000. In addition, unlocking the foldable device 1000 may refer to entering a state in which a user input may be received and an application for the foldable device 1000 may be executed based on the received user input.

Even when the foldable device 1000 does not receive a separate authentication input for unlocking the foldable device 1000, the foldable device 1000 may unlock itself in response to receiving a user input for a registered user unfolding the foldable device 1000. In response to unlocking the foldable device 1000, the foldable device 1000 may display a home UI including a list of applications.

Furthermore, the foldable device 1000 may not unlock the foldable device 1000 in response to determining that the user who has unfolded the foldable device 1000 is not one of the at least one user registered with the foldable device 1000. "While the foldable device 1000 remains locked, the foldable device 1000 may display an authentication UI for authenticating the user.

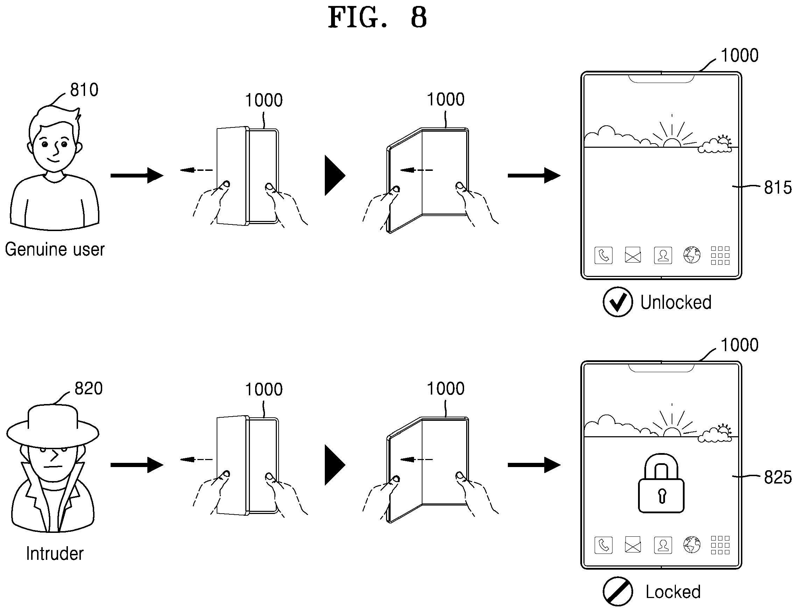

FIG. 8 illustrates a method, performed by the foldable device 1000, of unlocking the foldable device 1000 based on a user unfolding the foldable device 1000, according to an embodiment of the present disclosure.

Referring to FIG. 8, the foldable device 1000 may identify whether a user unfolding the foldable device 1000 is a registered user, and may unlock the foldable device 1000.

In response to receiving a user input for unfolding the foldable device 1000, the foldable device 1000 may identify whether the user who has unfolded the foldable device 1000 is a registered user based on motion sensor values when the foldable device 1000 is unfolded.

In response to determining that the user who has unfolded the foldable device 1000 is a registered user 810, the foldable device 1000 may unlock the foldable device 1000. In response to unlocking the foldable device 1000, the foldable device 1000 may display a home UI 815 and receive a user input for selecting an application.

In response to determining that the user who has unfolded the foldable device 1000 is an unregistered user 820, the foldable device 1000 may not unlock the foldable device 1000. The foldable device 1000 may display an authentication UI 825 without unlocking it.

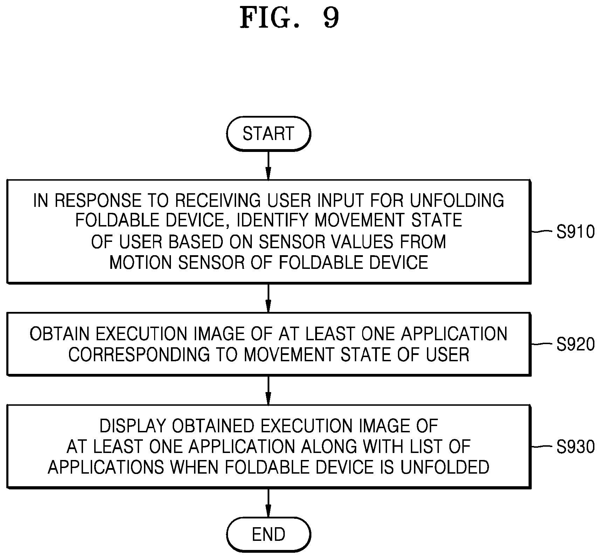

FIG. 9 is a flowchart of a method, performed by the foldable device 1000, of providing an application based on a movement state of a user, according to an embodiment of the present disclosure.

In operation S910, in response to receiving a user input for unfolding the foldable device 1000, the foldable device 1000 may identify a movement state of a user based on sensor values from a motion sensor of the foldable device 1000.

According to an embodiment, the foldable device 1000 may calculate at least one motion feature based on motion sensor values when the foldable device 1000 is unfolded, input the calculated at least one motion feature as an input vector of an Al module, and determine a movement state calculated by the Al module as a movement state of the user.

The motion features of the foldable device 1000 may include at least one of a statistical value of sensor values or a coefficient value of a spectrum of the sensor values. For example, a motion feature of the foldable device 1000 may be a mean, a standard deviation, a variance, or an FFT coefficient of sensor values over time.

According to an embodiment, the foldable device 1000 may transmit motion feature values to an external server (not shown), the external server may identify a movement state of the user based on the motion feature values, and the foldable device 1000 may receive the identified movement state of the user from the external server.

In operation S920, the foldable device 1000 may obtain an execution image of at least one application corresponding to the movement state of the user.

According to an embodiment, the foldable device 1000 may obtain an execution image of an application executed last among applications corresponding to the movement state of the user.

Applications corresponding to a standing state may include, but are not limited to, an e-book app, an e-newspaper app, and an Internet app. Furthermore, applications corresponding to a lying-down state may include, but are not limited to, an SNS app, a video app, and a music app. In addition, applications corresponding to a walking state may include, but are not limited to, a messaging app and a phone app.

According to an embodiment, the foldable device 1000 may execute at least one application corresponding to a movement state and obtain an execution image generated as the at least one application is executed.

According to another embodiment, when an application is exited after execution or when the application is hidden without being exited after execution, the foldable device 1000 may store a last execution image of the application in correspondence to identification information of the application. Accordingly, the foldable device 1000 may obtain a last execution image of the at least one application corresponding to the movement state of the user.

In operation S930, when the foldable device 1000 is unfolded, the foldable device 1000 may display the obtained execution image of the at least one determined application along with a list of applications.

According to an embodiment, the foldable device 1000 may display the obtained execution image of the at least one application on a home image including a list of applications.

In addition, according to another embodiment, the foldable device 1000 may display icons of applications corresponding to the movement state of the user on the home image.

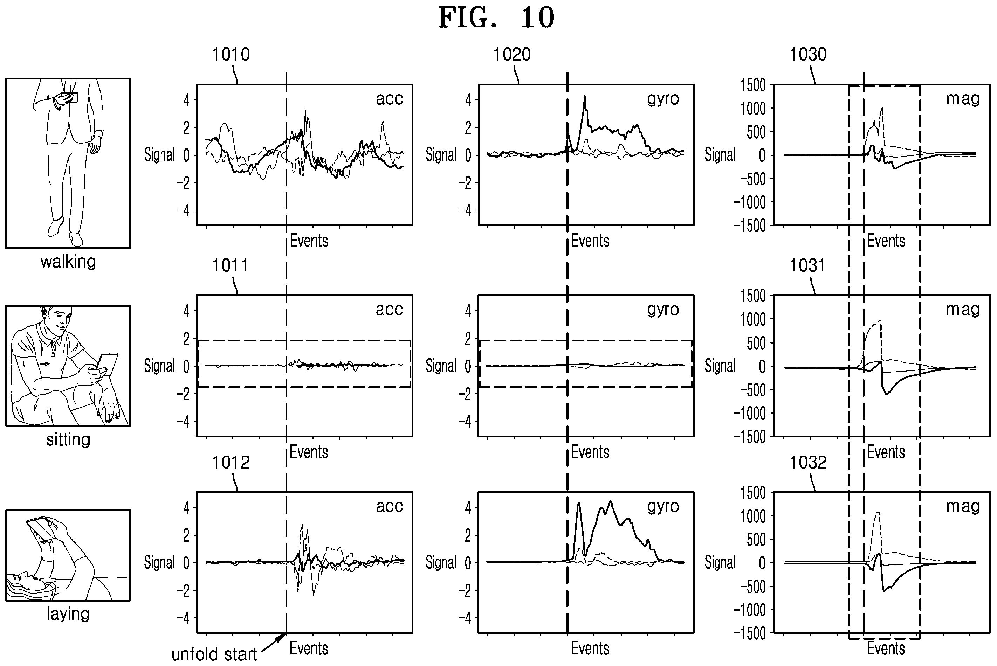

FIG. 10 illustrates a method, performed by the foldable device 1000, of identifying a movement state of a user based on sensor values from a motion sensor of the foldable device 1000, according to an embodiment of the present disclosure.

Referring to FIG. 10, motion sensor values of the foldable device 1000 when the foldable device 1000 is unfolded may vary depending on a movement state of a user.

For example, accelerometer values 1010 when the user is walking may fluctuate significantly before and after the foldable device 1000 starts to be unfolded. On the other hand, accelerometer values 1011 when the user is sitting may show a slight fluctuation in sensor value after the foldable device 1000 starts to be unfolded. Furthermore, accelerometer values 1012 when the user is lying down may show a rapid increase in fluctuations of sensor values after the foldable device 1000 starts to be unfolded.

Furthermore, for example, the accelerometer values 1011 and gyroscope values 1020 when the user is sitting show only slight fluctuations before and after the foldable device 1000 starts to be unfolded, while magnetometer values 1030 when the user is sitting may show rapid fluctuations when the foldable device 1000 is unfolded.

In addition, for example, magnetometer values 1030 to 1032 when the user is walking, sitting, and lying down may show different patterns.

Based on motion features according to such a movement state of the user, the foldable device 1000 may determine a movement state of the user when the foldable device 1000 is unfolded.

According to an embodiment, the foldable device 1000 may be equipped with a module for identifying a movement state of the user from motion features based on an Al model. The Al model may be trained to output a movement state of the user when motion features of the foldable device 1000 are input as an input vector.

The motion features of the foldable device 1000 may include at least one of a statistical value of sensor values and a coefficient value of a spectrum of the sensor values. For example, a motion feature of the foldable device 1000 may be a mean, a standard deviation, a variance, or an FFT coefficient of sensor values over time.

Accordingly, the foldable device 1000 may calculate at least one motion feature based on sensor values from the motion sensor when the foldable device 1000 is unfolded, input the calculated at least one motion feature as an input vector of an Al module, and determine a movement state calculated by the Al module as a movement state of the user.

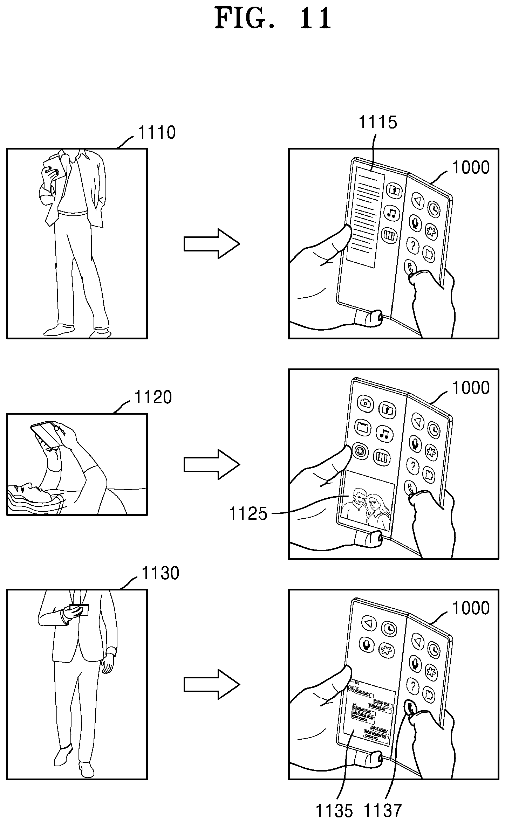

FIG. 11 illustrates a method, performed by the foldable device 1000, of providing an application based on a movement state of a user, according to an embodiment of the present disclosure.

Referring to FIG. 11, in response to receiving a user input for unfolding the foldable device 1000, the foldable device 1000 may display, on a home image, an execution image of an application corresponding to a movement state of the user, along with a list of applications.

In response to receiving a user input for unfolding the foldable device 1000 when the user is in a standing state 1110, the foldable device 1000 may determine a movement state of the user as the standing state, determine an application executed last among applications corresponding to the standing state as an e-book, and display a last execution image 1115 of the e-book on the home image.

In response to receiving a user input for unfolding the foldable device 1000 when the user is in a lying-down state 1120, the foldable device 1000 may determine a movement state of the user as the lying-down state, determine an application executed last among applications corresponding to the lying-down state as a video app, and display a last execution image 1125 of the video app on the home image.

In response to receiving a user input for unfolding the foldable device 1000 when the user is in a walking state 1130, the foldable device 1000 may determine a movement state of the user as the walking state and display, on the home image, an icon 1137 of a phone app that is an application corresponding to the walking state. Furthermore, according to an embodiment, the foldable device 1000 may display recent call records of the phone app. Furthermore, the foldable device 1000 may execute a messaging app, which is an application corresponding to the walking state, and display, on the home image, an execution image 1135 generated by the messaging app being executed.

Furthermore, in response to receiving a user input for selecting the last execution images 1115 and 1125 of the applications displayed on the home image, the execution image 1135 of the application being executed, or the icon 1137 of the application, which are all displayed on the home image in correspondence to the movement states of the user, the foldable device 1000 may execute the corresponding applications at a full screen size or at a preset size.

In addition, while an execution image of an application corresponding to a movement state of the user is displayed on the home image, in response to receiving a user input for selecting an icon of another application on the home image, the foldable device 1000 may delete the execution image of the application corresponding to the movement state of the user, which is displayed on the home image.

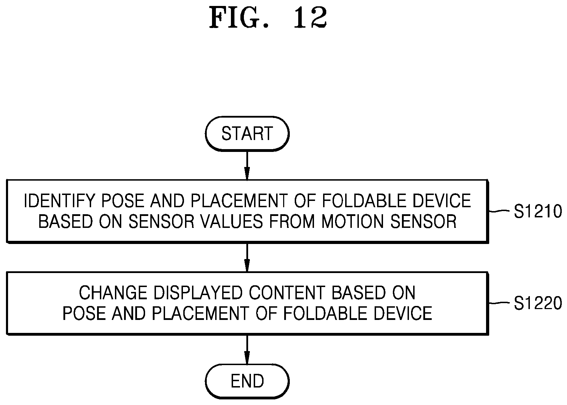

FIG. 12 is a flowchart of a method, performed by the foldable device 1000, of executing an application based on a pose and placement of the foldable device 1000, according to an embodiment of the present disclosure.

In operation S1210, the foldable device 1000 may identify a pose and placement of the foldable device 1000 based on sensor values from a motion sensor.

The pose of the foldable device 1000 may include a folding angle of the foldable device 1000. Furthermore, the placement of the foldable device 1000 may include an identification value of an edge or side of the foldable device 1000 that is in contact with the floor.

In operation S1220, the foldable device 1000 may change displayed content based on the pose and placement of the foldable device 1000.

The foldable device 1000 may store identification information of an application corresponding to a pose and placement of the foldable device 1000. Furthermore, the foldable device 1000 may store identification information of content to be displayed in correspondence to a pose and placement of the foldable device 1000.

In response to receiving a user input for changing a pose and placement of the foldable device 1000, the foldable device 1000 may execute an application corresponding to the changed pose and placement. In addition, according to an embodiment, the foldable device 1000 may display content corresponding to the changed pose and placement.

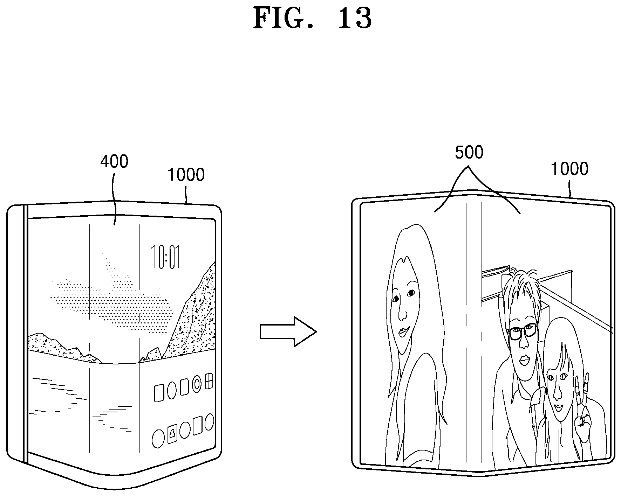

FIG. 13 illustrates a method, performed by the foldable device 1000, of providing content based on a pose and placement of the foldable device 1000, according to an embodiment of the present disclosure.

Referring to FIG. 13, the foldable device 1000 may change displayed content based on a pose and placement of the foldable device 1000.

While the foldable device 1000 is displaying a home image 400, the foldable device 1000 may receive a user input for unfolding the foldable device 1000 to a reference angle (e.g., 30 degrees to 50 degrees) and standing the foldable device 1000 so that a reference edge touches the floor.

In response to determining, based on sensor values from a motion sensor, that the foldable device 1000 is unfolded to the reference angle and in an erect position with the reference edge of the foldable device 1000 touching the floor, the foldable device 1000 may obtain a photo 500 corresponding to the pose and placement of the foldable device 1000. In addition, the foldable device 1000 may display the obtained photo 500 instead of the home image 400.

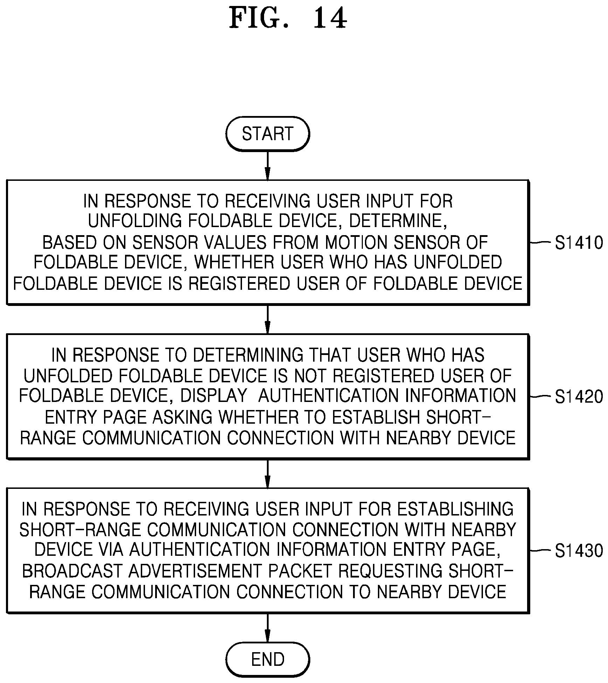

FIG. 14 illustrates a flowchart of a method, performed by the foldable device 1000, of establishing a short-range communication connection between a plurality of foldable devices based on a user input for unfolding the foldable device 1000, according to an embodiment of the present disclosure.

In operation S1410, in response to receiving a user input for unfolding the foldable device 1000, the foldable device 1000 may determine, based on sensor values from a motion sensor of the foldable device 1000, whether the user who has unfolded the foldable device 1000 is a user registered with the foldable device 1000. Operation S1410 may be described with reference to operation S710 of FIG. 7.

In operation S1420, in response to determining that the user who has unfolded the foldable device 1000 is not a user registered with the foldable device 1000, the foldable device 1000 may display an authentication information entry page asking whether to establish a short-range communication connection with a nearby device.

In response to determining that the user who has unfolded the foldable device 1000 is not a user registered with the foldable device 1000, the foldable device 1000 may not unlock the foldable device 1000 and display a UI for requesting user authentication. The UI for requesting user authentication may include a UI for inputting a fingerprint or pattern.

In operation S1430, in response to receiving a user input for establishing the short-range communication connection with the nearby device via the authentication information entry page, the foldable device 1000 may broadcast an advertisement packet requesting the short-range communication connection to the nearby device.

The user input for establishing the short-range communication connection with the nearby device may be a user input for entering authentication information via the authentication information entry page.

In response to receiving a user input for entering authentication information via the authentication information entry page, the foldable device 1000 may determine whether the entered authentication information is the same as prestored authentication information, and when the entered authentication information is the same as the prestored authentication information, the foldable device 1000 may broadcast an advertisement packet requesting the short-range communication connection to the nearby device.

By broadcasting the advertisement packet, the foldable device 1000 may establish the short-range communication connection with other devices.

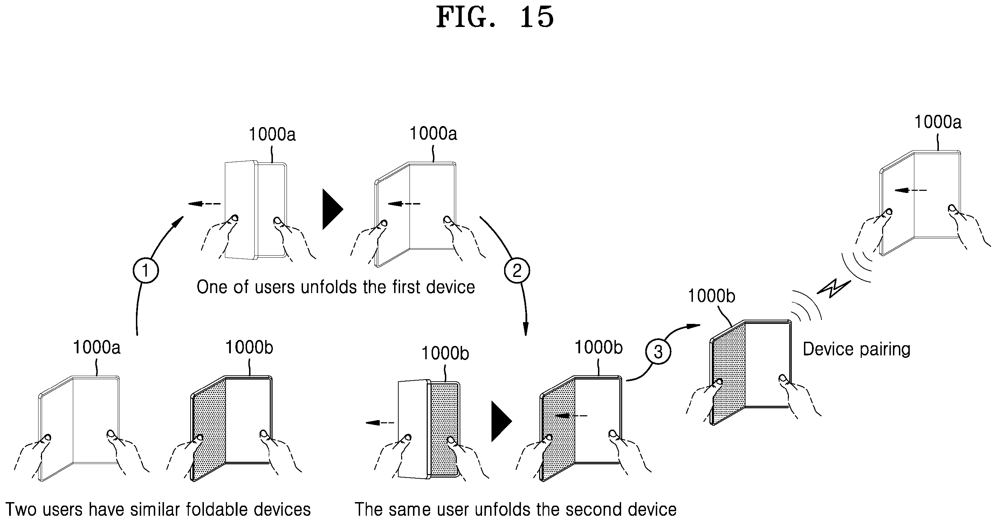

FIG. 15 illustrates a method, performed by the foldable device 1000, of establishing a short-range communication connection with another foldable device based on a user input for unfolding the foldable device, according to an embodiment of the present disclosure.

Referring to FIG. 15, the first device 1000a and the second device 1000b may establish a short-range communication connection therebetween based on a user input for unfolding the foldable device 1000.

A first device 1000a is a device of a first user, and stores the first user as a registered user based on motion features when the first user unfolds the first device 1000a.

A second device 1000b is a device of a second user, and stores the second user as a registered user, based on motion features when the second user unfolds the second device 1000b, while not storing the first user as a registered user.

The first device 1000a may receive a user input from the first user unfolding the first device 1000a. Furthermore, the first device 1000a may activate a short-range communication module according to a user input for activating short-range communication.

The second device 1000b may receive a user input from the first user unfolding the second device 1000b. In response to receiving the user input from the first user unfolding the second device 1000b, the second device 1000b may determine that the user who has unfolded the second device 1000b is not a registered user, based on motion features obtained when the second device 1000b is unfolded.

When determining that the user who has unfolded the second device 1000b is not a registered user, the second device 1000b may display an authentication information entry page asking whether to establish a short-range communication connection with a nearby device. In response to receiving a user input for establishing the short-range communication connection with the nearby device via the authentication information entry page, the second device 1000b may broadcast an advertisement packet requesting the short-range communication connection to the nearby device.

In response to receiving the advertisement packet from the second device 1000b, the first device 1000a may display identification information of the second device 1000b included in the advertisement packet, and display a confirmation message asking whether to establish a short-range connection with the second device 1000b. In response to receiving a user input for establishing the short-range communication connection with the second device 1000b via the confirmation message, the first device 1000a may establish the short-range communication connection with the second device 1000b based on address information of the second device 1000b included in the advertisement packet. For example, the first device 1000a may establish a short-distance communication connection by performing Bluetooth pairing with the second device 1000b.

Accordingly, the user may establish a short-range communication connection between another user's foldable device 1000 and his or her own foldable device 1000 even without performing a separate user input for establishing a short-range communication connection.

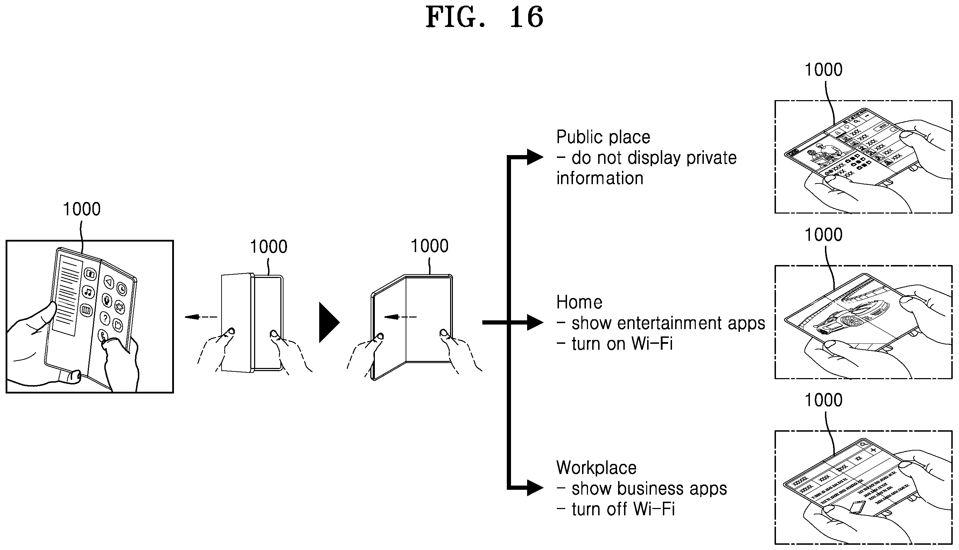

FIG. 16 illustrates a method, performed by the foldable device 1000, of executing an application according to a user's surrounding environment, according to an embodiment of the present disclosure.

Referring to FIG. 16, the foldable device 1000 may identify the user's surrounding environment when the foldable device 1000 is unfolded and provide an application corresponding to the identified surrounding environment.

The foldable device 1000 may receive surrounding noise via a microphone. The foldable device 1000 may also identify the surrounding environment based on the received noise. For example, when various types of voices or mechanical sounds are received, the foldable device 1000 may determine that the user is located in a public place. Furthermore, when noise at or below a reference decibel level is detected, the foldable device 1000 may determine that the user is located in a home.

The foldable device 1000 may provide applications based on the identified surrounding environment. For example, when the surrounding environment is identified as a public place, the foldable device 1000 may not display personal information (e.g., phone numbers, names, etc.), or when displayed, may display the personal information by reducing the size or boldness of characters therein so that the personal information is more difficult to identify than other information. Furthermore, for example, when the surrounding environment is identified as inside the home, the foldable device 1000 may activate a Wi-Fi communication module. Furthermore, when the surrounding environment is identified as inside the home, the foldable device 1000 may recommend and display or execute entertainment apps such as game, music, and video apps. Furthermore, for example, when the surrounding environment is identified as an office, the foldable device 1000 may disable the Wi-Fi communication module. In addition, when the surrounding environment is identified as the office, the foldable device 1000 may recommend or execute business apps.

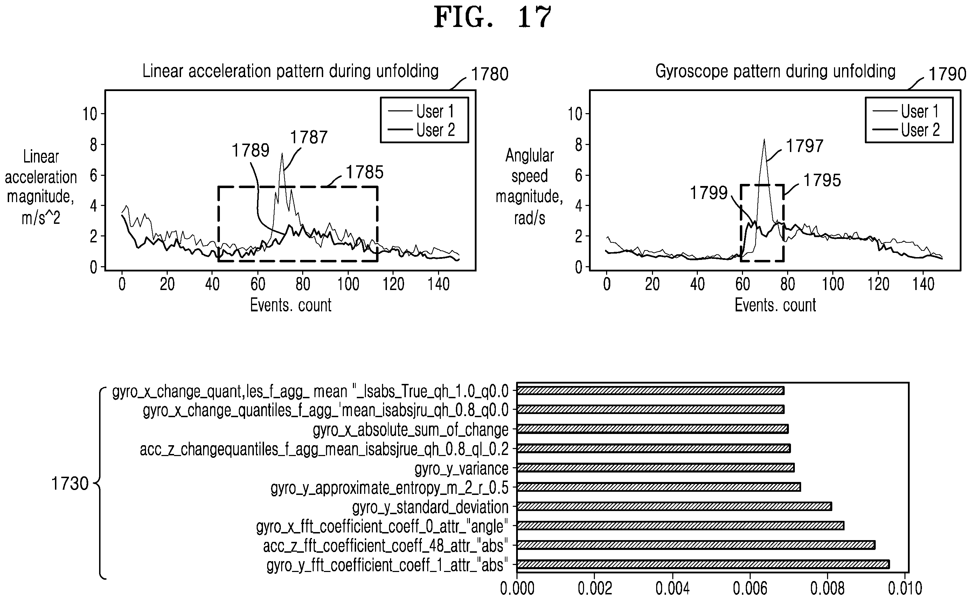

FIG. 17 illustrates a method, performed by the foldable device 1000, of training an Al model, according to an embodiment of the present disclosure.

Referring to FIG. 17, the foldable device 1000 may train an Al model.

Graph 1 1780 shows the magnitude of acceleration over time detected by an accelerometer when user 1 and user 2 unfold the foldable device 1000. At a 40 to 110 count interval in graph 1 1780, it can be seen that a graph 1787 for user 1 is significantly different from a graph 1789 for user 2.

Graph 2 1790 shows the magnitude of angular speed over time detected by a gyroscope when user 1 and user 2 unfold the foldable device 1000. At a 60 to 80 count interval 1795 of graph 2 1790, it can be seen that a graph 1797 for user 1 is significantly different from a graph 1799 for user 2.

As shown in graph 1 1780 and graph 2 1790, when each user unfolds the foldable device 1000, the acceleration or angular speed of the foldable device 1000 over time is different for each user, and thus, the foldable device 1000 may identify a user unfolding the foldable device 1000 by using these motion features.

An Al model may be trained to output a probability that each user unfolds the foldable device 1000 when an input vector containing motion features of the foldable device 1000 is input.

The motion features of the foldable device 1000 may include not only sensor values of the motion sensor itself but also at least one of a statistical value of the sensor values or a coefficient value of a spectrum of the sensor values. For example, the motion features of the foldable device 1000 may include, but are not limited to, the amount of change, mean, variance, standard deviation, entropy, and FFT coefficient of the sensor values.

Referring to FIG. 17, motion features 1730 of the foldable device 1000 may include, for example, a mean of x-axis values of the gyroscope, a variance of y-axis values of the gyroscope, and a 48th FFT coefficient of z-axis values of the accelerometer.

In addition, the foldable device 1000 may provide a UI for training an Al model based on data from users. For example, the foldable device 1000 may display a UI for registering a user. The UI for registering a user may include guide information that guides the user to unfold the foldable device 1000 several times. Furthermore, the UI for registering a user may include guide information guiding the user to enter his or her identification information.

In addition, in response to receiving a user input for entering identification information of the user and a user input for unfolding the foldable device 1000 several times, the foldable device 1000 may calculate motion feature values of the foldable device 1000 based on motion sensor values of the foldable device 1000 when the foldable device 1000 is unfolded, and train the Al model to select a user with the input identification information when the motion feature values of the foldable device 1000 are input as an input vector of the Al model.

Accordingly, in response to receiving a user input for unfolding the foldable device 1000, the foldable device 1000 may identify the user who has unfolded the foldable device 1000 by using the trained Al model.

According to an embodiment, training of the Al model may be performed on a separate server. For example, the foldable device 1000 may transmit, to a server, identification information of a user and motion sensor values of the foldable device 1000 when the foldable device is unfolded, and may train an Al model to select the user with the input identification information when motion feature values of the foldable device 1000 are input as an input vector of the Al model.

Accordingly, the foldable device 1000 may transmit the motion sensor values or calculated motion features to the server and receive identification information of the user who has unfolded the foldable device 1000 from the server.

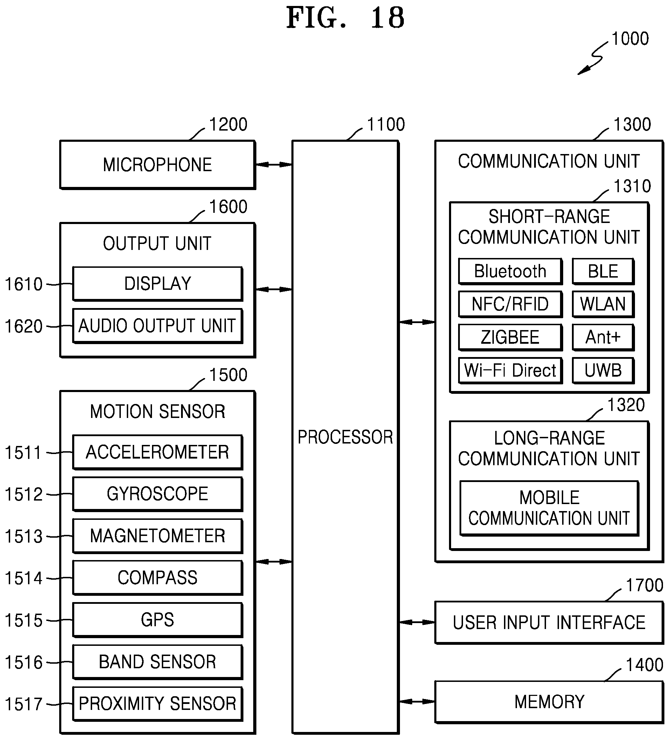

FIG. 18 is a block diagram of the foldable device 1000 according to an embodiment of the present disclosure.

Referring to FIG. 18, the foldable device 1000 includes a processor 1100, a microphone 1200, a communication unit 1300, a memory 1400, a motion sensor 1500, an output unit 1600, and a user input interface 1700.

All components illustrated in FIG. 18 are not essential components of the foldable device 1000. The foldable device 1000 may be implemented with more components than those shown in FIG. 18 or implemented with fewer components than those shown in FIG. 18. For example, the foldable device 1000 may be implemented by the processor 1100, the memory 1400, and the motion sensor 1500.

The processor 1100 controls all operations of the foldable device 1000. The processor 1320 may execute programs stored in the memory 1400 to control operations of the components of the foldable device 1000.

According to an embodiment, the processor 1100 may include a separate neural processing unit (NPU) that performs operations of a machine learning model. The processor 1100 may also include a central processing unit (CPU), a graphics processing unit (GPU), or the like.

According to an embodiment, the processor 1100 may include a hardware structure (e.g., an NPU) specialized for processing an Al model. The Al model may be created through machine learning. Such machine learning may be performed, for example, in the foldable device 1000 itself, where the Al model is implemented, or may be performed through a separate server (not shown).

Learning algorithms may include, for example, supervised learning, unsupervised learning, semi-supervised learning, or reinforcement learning, but are not limited thereto. The Al model may include a plurality of artificial neural network layers. An artificial neural network may include, but is not limited to, one of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network (DQN), or a combination of two or more of the stated networks. The Al model may include a software structure in addition to or instead of the hardware structure.

The microphone 1200 may receive a voice command or voice request from a user. Accordingly, the processor 1100 may control an operation corresponding to the voice command or voice request to be performed. Furthermore, the microphone 1200 may receive sound around the foldable device 1000.

The communication unit 1300 may, under the control of the processor 1100, transmit and receive information, image signals, or audio signals to and from a source device (not shown) or an external server according to a protocol. The communication unit 1300 may include at least one communication module and at least one port for transmitting and receiving data to and from an external device (not shown).

Furthermore, the communication unit 1300 may communicate with the external device via at least one wired or wireless communication network. The communication unit 1300 may include at least one of a short-range communication unit 1310 or a long-range communication unit 1320, or a combination thereof. The communication unit 1300 may include at least one antenna for wirelessly communicating with other devices.

The short-range communication unit 1310 may include at least one communication module (not shown) for performing communication according to communication standards such as Bluetooth Low Energy (BLE), near field communication (NFC)/radio frequency identification (RFID), WiFi Direct (WFD), ultra-wideband (UWB), ZigBee, or the like. Furthermore, the long-range communication unit 1320 may include a communication module (not shown) for performing communication via a network for Internet communication. In addition, the long-range communication unit 1320 may include a mobile communication unit that performs communication according to communication standards such as third generation (3G), fourth generation (4G), fifth generation (5G), and/or sixth generation (6G).

In addition, the communication unit 1300 may include a communication module, such as an infrared (IR) communication module, which is capable of receiving control commands from a remote controller (not shown) located nearby.

The memory 1400 stores various pieces of information, data, commands, programs, etc. necessary for operations of the foldable device 1000. The memory 1400 may include at least one of volatile memory or non-volatile memory, or a combination thereof. The memory 1400 may include at least one type of storage medium from among a flash memory-type memory, a hard disk-type memory, a multimedia card micro-type memory, a card-type memory (e.g., a secure digital (SD) card or an eXtreme digital (XD) memory), random access memory (RAM), static RAM (SRAM), read-only memory (ROM), electrically erasable programmable ROM (EEPROM), PROM, a magnetic memory, a magnetic disc, and an optical disc. In addition, the foldable device 1000 may operate a web storage or cloud server that performs a storage function on the Internet.

The motion sensor 1500 may detect movement of the foldable device 1000.

The motion sensor 1500 includes at least one of an accelerometer 1511, a gyroscope 1512, a magnetometer 1513, a compass 1514, a GPS 1515, a band sensor 1516, or a proximity sensor 1517.

The band sensor 1516 is a device that converts information about a location (including a direction and an angle) where a flexible display (not shown) is folded or bent into an electrical signal. For example, the band sensor 1516 may transmit different signals to the processor 1100 according to a folding direction (folding inward or folding outward) and angle of the flexible display, and the processor 1100 may detect the folding direction and the folding angle of the flexible display based on signals output from the band sensor.

In addition, the processor 1100 may receive a user input for unfolding the foldable device 1000 based on sensor values from the motion sensor 1500.

The output unit 1600 may include a display 1610 and an audio output unit 1620, but is not limited thereto.

The display 1610 may, under the control of the processor 1100, output image data that has undergone image processing by an image processor (not shown) via a display panel (not shown). The display panel may include at least one of a liquid crystal display (LCD), a thin film transistor LCD (TFT-LCD), an organic light-emitting diode (OLED), a flexible display, a three-dimensional (3D) display, or an electrophoretic display.

The audio output unit 1620 may output sound signals to the outside of the foldable device 1000. The audio output unit 1620 may include, for example, a speaker or a receiver. The speaker may be used for general purposes such as multimedia playback or recording playback. The receiver may be used to receive incoming calls.

The user input interface 1700 may receive a user input for controlling the foldable device 1000. The user input interface 1700 may include a key (not shown), a touch screen (not shown), or the like. The user input interface 1700 receives a user input and transmits it to the processor 1100.

The user input interface 1700 may include, but is not limited to, user input devices including a touch panel that detects a user's touch, a button that receives a push manipulation by the user, a wheel that receives a rotation manipulation by the user, a key board, and a dome switch.

In addition, the user input interface 1700 may include a motion detection sensor (not shown). For example, the motion detection sensor may detect movement of the foldable device 1000 and receive the detected movement as a user input.

The term "module" or "portion" used in various embodiments set forth herein may include a unit implemented in hardware, software, or firmware, and may be used interchangeably with other terms, for example, "logic", "logic block", "component", or "circuit". A module may be a single integral component, or a minimum unit or part thereof performing one or more functions. For example, according to an embodiment, a module may be implemented in a form of an application-specific integrated circuit (ASIC).

The processor 1100 may receive, via the motion sensor 1500, a user input for unfolding the foldable device 1000.

In response to receiving a user input for unfolding the foldable device 1000, the processor 1100 is configured to identify, based on sensor values from the motion sensor 1500 of the foldable device 1500, a user who has unfolded the foldable device 1000 among at least one user registered with the foldable device 1000.

Furthermore, the processor 1100 is configured to provide an application for the foldable device 1000 based on the identified user.

For example, the processor 1100 may obtain a list of applications stored in the foldable device 1000 in correspondence to the identified user, and when the foldable device 1000 is unfolded, display the obtained list of applications on the display 1610.

Furthermore, for example, the processor 1100 may restrict execution of some of a plurality of applications based on the identified user.

Furthermore, for example, the processor 1100 may receive a user input for displaying a plurality of contents via the user input interface 1700, determine content corresponding to the identified user among the plurality of contents, and display the determined content on the display 1610.

Furthermore, according to an embodiment, in response to receiving a user input for unfolding the foldable device 1000 via the motion sensor 1500 of the foldable device 1000, the processor 1100 may determine, based on sensor values from the motion sensor 1500, whether the user who has unfolded the foldable device 1000 is one of at least one user registered with the foldable device 1000, and unlock the foldable device 1000 in response to determining that the user who has unfolded the foldable device 1000 is one of the at least one user registered with the foldable device 1000.

Furthermore, according to an embodiment, in response to receiving a user input for unfolding the foldable device 1000, the processor 1100 may identify a movement state of the user based on sensor values of the motion sensor 1500 of the foldable device 1000, obtain an execution image of at least one application corresponding to the movement state of the user, and when the foldable device 1000 is unfolded, display, on the display 1610, the obtained execution image of the at least one application along with a list of applications.

Furthermore, according to an embodiment, the processor 1100 may identify a pose and placement of the foldable device 1000 based on sensor values from the motion sensor 1500, and change an executed application based on the identified pose and placement of the foldable device 1000.

Furthermore, according to an embodiment, in response to receiving a user input for unfolding the foldable device 1000 via the motion sensor 1500 of the foldable device 1000, the processor 1100 may determine, based on sensor values from the motion sensor 1500, whether the user who has unfolded the foldable device 1000 is a user registered with the foldable device 1000, display, in response to determining that the user who has unfolded the foldable device 1000 is not a user registered with the foldable device 1000, an authentication information entry page asking whether to establish a short-range communication connection with a nearby device, and in response to receiving a user input for establishing the short-range communication connection with the nearby device via the authentication information entry page, broadcast an advertisement packet requesting the short-range communication connection to the nearby device via the short-range communication unit 1310.

In addition, according to an embodiment, the processor 1100 may calculate motion feature values of the foldable device 1000 based on sensor values from the motion sensor 1500 when the foldable device 1000 is unfolded, and identify a user, who is output by a pre-trained Al model by inputting the calculated motion features as input values to the pre-trained Al model, as being the user who has unfolded the foldable device 1000.

A machine-readable storage medium may be provided in the form of a non-transitory storage medium. In this regard, the term 'non-transitory' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer in which data is temporarily stored.

According to an embodiment, methods according to various embodiments set forth herein may be included in a computer program product when provided. The computer program product may be traded, as a product, between a seller and a buyer. The computer program product may be distributed in the form of a machine-readable storage medium (e.g., compact disc-ROM (CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the machine-readable storage medium such as memory of a server of a manufacturer, a server of an application store, or a relay server.

## Claims

1. A method, performed by a foldable device (1000), of executing an application, the method comprising:
receiving a user input for unfolding the foldable device (1000) (S210);
in response to receiving the user input for unfolding the foldable device (1000), identifying, based on sensor values from a motion sensor (1500) of the foldable device (1000), a user who has unfolded the foldable device (1000) from among at least one user registered with the foldable device (1000) (S220); and
providing an application for the foldable device (1000) based on the identified user (S230).

2. The method of claim 1, wherein the providing of the application for the foldable device (1000) based on the identified user comprises:
obtaining a list of applications stored in the foldable device (1000) in correspondence to the identified user; and
when the foldable device (1000) is unfolded, displaying the obtained list of applications.

3. The method of claim 1 or 2, wherein the providing of the application for the foldable device (1000) based on the identified user comprises restricting execution of some of a plurality of applications based on the identified user.

4. The method of any one of claims 1 to 3, further comprising:
receiving a user input for displaying a plurality of contents;
determining content corresponding to the identified user among the plurality of contents; and
displaying the determined content.

5. The method of any one of claims 1 to 4, further comprising:
in response to receiving a user input for unfolding the foldable device, determining, based on sensor values from the motion sensor (1500) of the foldable device, whether the user who has unfolded the foldable device is one of the at least one user registered with the foldable device (S710); and
unlocking the foldable device in response to determining that the user who has unfolded the foldable device is one of the at least one user registered with the foldable device (S720).

6. The method of any one of claims 1 to 5, further comprising:
in response to receiving the user input for unfolding the foldable device (1000), identifying a movement state of the user based on the sensor values from the motion sensor (1500) of the foldable device (1000) (S910);
obtaining an execution image of at least one application corresponding to the movement state of the user (S920); and
displaying, when the foldable device (1000) is unfolded, the obtained execution image of the at least one application along with a list of applications (S930).

7. The method of claim 6, wherein the movement state comprises a state in which the user is standing (1110), a state in which the user is lying down (1120), and a state in which the user is walking (1130).

8. The method of any one of claims 1 to 7, further comprising:
identifying a pose and placement of the foldable device (1000) based on sensor values from the motion sensor (1500) (S1210); and
changing a displayed application based on the identified pose and placement of the foldable device (1000) (S1220).

9. The method of any one of claims 1 to 8, further comprising:
in response to receiving the user input for unfolding the foldable device (1000), determining, based on the sensor values from the motion sensor (1500) of the foldable device (1000), whether the user who has unfolded the foldable device (1000) is a user registered with the foldable device (1000) (S1410);
displaying, in response to determining that the user who has unfolded the foldable device (1000) is not a user registered with the foldable device (1000), an authentication information entry page asking whether to establish a short-range communication connection with a nearby device (S1420); and
in response to receiving a user input for establishing the short-range communication connection with the nearby device via the authentication information entry page, broadcasting an advertisement packet requesting the short-range communication connection to the nearby device (S1430).

10. The method of any one of claims 1 to 9, wherein
the identifying of, based on the sensor values from the motion sensor of the foldable device (1000), the user who has unfolded the foldable device (1000) among the at least one user registered with the foldable device (1000) comprises:
calculating motion feature values of the foldable device (1000) based on the sensor values from the motion sensor (1500) when the foldable device (1000) is unfolded; and
identifying a user, who is output by a pre-trained artificial intelligence (AI) model by inputting the calculated motion features as input values to the pre-trained Al model, as being the user who has unfolded the foldable device (1000).

11. A foldable device (1000) comprising:
a motion sensor (1500);
memory (1400) storing one or more computer programs; and
one or more processors (1100) communicatively coupled to the motion sensor and the memory (1400),
wherein the one or more computer programs include computer-executable instructions that, when executed by the one or more processors (1100), cause the foldable device (1000) to:
receive, via the motion sensor (1500), a user input for unfolding the foldable device (1000),
in response to receiving the user input for unfolding the foldable device (1000), identify, based on sensor values from the motion sensor (1500) of the foldable device (1000), a user who has unfolded the foldable device (1000) from among at least one user registered with the foldable device (1000), and
provide an application for the foldable device (1000) based on the identified user.

12. The foldable device (1000) of claim 11, wherein the one or more computer programs further include computer-executable instructions that, when executed by the one or more processors (1100), cause the foldable device (1000)to:
obtain a list of applications stored in the foldable device (1000) in correspondence to the identified user, and when the foldable device (1000) is unfolded, display the obtained list of applications.

13. The foldable device (1000) of claim 11 or 12, wherein the one or more computer programs further include computer-executable instructions that, when executed by the one or more processors (1100), cause the foldable device (1000) to restrict execution of some of a plurality of applications based on the identified user.

14. The foldable device (1000) of any one of claims 11 to 14, wherein the at least one processor (1100) is further configured to, in response to receiving a user input for unfolding the foldable device (1000), determine, based on sensor values from the motion sensor (1500) of the foldable device (1000), whether the user who has unfolded the foldable device (1000) is one of the at least one user registered with the foldable device (1000), and unlock the foldable device (1000) in response to determining that the user who has unfolded the foldable device (1000) is one of the at least one user registered with the foldable device (1000).

15. A non-transitory computer-readable storage media (1400) storing computer-executable instructions that, when executed by one or more processors (1100) of a foldable device (1000), cause the foldable device (1000) to perform operations of any one of claim 1 to 10.

## Patentansprüche

1. Verfahren, durchgeführt durch eine faltbare Vorrichtung (1000), zum Ausführen einer Anwendung, wobei das Verfahren Folgendes umfasst:
Empfangen einer Benutzereingabe zum Entfalten der faltbaren Vorrichtung (1000) (S210);
als Reaktion auf das Empfangen der Benutzereingabe zum Entfalten der faltbaren Vorrichtung (1000), Identifizieren, basierend auf Sensorwerten von einem Motionssensor (1500) der faltbaren Vorrichtung (1000), eines Benutzers, der die faltbare Vorrichtung (1000) entfaltet hat, aus zumindest einem Benutzer, der bei der faltbaren Vorrichtung (1000) registriert ist (S220); und
Bereitstellen einer Anwendung für die faltbare Vorrichtung (1000) basierend auf dem identifizierten Benutzer (S230).

2. Verfahren nach Anspruch 1, wobei das Bereitstellen der Anwendung für die faltbare Vorrichtung (1000) basierend auf dem identifizierten Benutzer Folgendes umfasst:
Erhalten einer Liste von Anwendungen, die in der faltbaren Vorrichtung (1000) gespeichert sind, in Übereinstimmung mit dem identifizierten Benutzer; und
wenn die faltbare Vorrichtung (1000) entfaltet ist, Anzeigen der erhaltenen Liste von Anwendungen.

3. Verfahren nach Anspruch 1 oder 2, wobei das Bereitstellen der Anwendung für die faltbare Vorrichtung (1000) basierend auf dem identifizierten Benutzer Einschränken von Ausführung von einigen aus einer Vielzahl von Anwendungen basierend auf dem identifizierten Benutzer umfasst.

4. Verfahren nach einem der Ansprüche 1 bis 3, ferner umfassend:
Empfangen einer Benutzereingabe zum Anzeigen einer Vielzahl von Inhalten;
Bestimmen von Inhalt entsprechend dem identifizierten Benutzer aus der Vielzahl von Inhalten; und
Anzeigen des bestimmten Inhalts.

5. Verfahren nach einem der Ansprüche 1 bis 4, ferner umfassend:
als Reaktion auf das Empfangen einer Benutzereingabe zum Entfalten der faltbaren Vorrichtung, Bestimmen, basierend auf Sensorwerten von dem Motionssensor (1500) der faltbaren Vorrichtung, ob der Benutzer, der die faltbare Vorrichtung entfaltet hat, einer von dem zumindest einen Benutzer ist, der bei der faltbaren Vorrichtung registriert ist (S710); und
Entsperren der faltbaren Vorrichtung als Reaktion auf das Bestimmen, dass der Benutzer, der die faltbare Vorrichtung entfaltet hat, einer von dem zumindest einen Benutzer ist, der bei der faltbaren Vorrichtung registriert ist (S720).

6. Verfahren nach einem der Ansprüche 1 bis 5, ferner umfassend:
als Reaktion auf das Empfangen der Benutzereingabe zum Entfalten der faltbaren Vorrichtung (1000), Identifizieren eines Bewegungszustands des Benutzers basierend auf den Sensorwerten von dem Motionssensor (1500) der faltbaren Vorrichtung (1000) (S910);
Erhalten eines Ausführungsbildes von zumindest einer Anwendung entsprechend dem Bewegungszustand des Benutzers (S920); und
Anzeigen, wenn die faltbare Vorrichtung (1000) entfaltet ist, des erhaltenen Ausführungsbildes der zumindest einen Anwendung zusammen mit einer Liste von Anwendungen (S930).

7. Verfahren nach Anspruch 6, wobei der Bewegungszustand einen Zustand, in dem der Benutzer steht (1110), einen Zustand, in dem der Benutzer liegt (1120), und einen Zustand, in dem der Benutzer geht (1130), umfasst.

8. Verfahren nach einem der Ansprüche 1 bis 7, ferner umfassend:
Identifizieren einer Pose und Platzierung der faltbaren Vorrichtung (1000) basierend auf Sensorwerten von dem Motionssensor (1500) (S1210); und
Ändern einer angezeigten Anwendung basierend auf der identifizierten Pose und Platzierung der faltbaren Vorrichtung (1000) (S1220).

9. Verfahren nach einem der Ansprüche 1 bis 8, ferner umfassend:
als Reaktion auf das Empfangen der Benutzereingabe zum Entfalten der faltbaren Vorrichtung (1000), Bestimmen, basierend auf den Sensorwerten von dem Motionssensor (1500) der faltbaren Vorrichtung (1000), ob der Benutzer, der die faltbare Vorrichtung (1000) entfaltet hat, ein Benutzer ist, der bei der faltbaren Vorrichtung (1000) registriert ist (S1410);
Anzeigen, als Reaktion auf das Bestimmen, dass der Benutzer, der die faltbare Vorrichtung (1000) entfaltet hat, kein Benutzer ist, der bei der faltbaren Vorrichtung (1000) registriert ist, einer Authentifizierungsinformationseingabeseite, die fragt, ob eine Nahbereichskommunikationsverbindung mit einer nahen Vorrichtung herzustellen ist (S1420); und
als Reaktion auf das Empfangen einer Benutzereingabe zum Herstellen der Nahbereichskommunikationsverbindung mit der nahen Vorrichtung über die Authentifizierungsinformationseingabeseite, Senden eines Werbepakets, das die Nahbereichskommunikationsverbindung anfordert, an die nahe Vorrichtung (S1430).

10. Verfahren nach einem der Ansprüche 1 bis 9, wobei
das Identifizieren, basierend auf den Sensorwerten von dem Motionssensor der faltbaren Vorrichtung (1000), des Benutzers, der die faltbare Vorrichtung (1000) entfaltet hat, aus dem zumindest einen Benutzer, der bei der faltbaren Vorrichtung (1000) registriert ist, Folgendes umfasst:
Berechnen von Motionsmerkmalswerten der faltbaren Vorrichtung (1000) basierend auf den Sensorwerten von dem Motionssensor (1500), wenn die faltbare Vorrichtung (1000) entfaltet ist; und
Identifizieren eines Benutzers, der durch ein vortrainiertes Modell künstlicher Intelligenz (AI) ausgegeben wird, durch Eingeben der berechneten Motionsmerkmale als Eingabewerte in das vortrainierte AI-Modell, als der Benutzer, der die faltbare Vorrichtung (1000) entfaltet hat.

11. Faltbare Vorrichtung (1000), umfassend:
einen Motionssensor (1500);
Speicher (1400), der ein oder mehrere Computerprogramme speichert; und
einen oder mehrere Prozessoren (1100), die kommunikativ an den Motionssensor und dem Speicher (1400) gekoppelt sind,
wobei das eine oder die mehreren Computerprogramme computerausführbare Anweisungen beinhalten, die, wenn durch den einen oder die mehreren Prozessoren (1100) ausgeführt, die faltbare Vorrichtung (1000) zu Folgendem veranlassen:
Empfangen, über den Motionssensor (1500), einer Benutzereingabe zum Entfalten der faltbaren Vorrichtung (1000),
als Reaktion auf das Empfangen der Benutzereingabe zum Entfalten der faltbaren Vorrichtung (1000), Identifizieren, basierend auf Sensorwerten von dem Motionssensor (1500) der faltbaren Vorrichtung (1000), eines Benutzers, der die faltbare Vorrichtung (1000) entfaltet hat, aus zumindest einem Benutzer, der bei der faltbaren Vorrichtung (1000) registriert ist, und
Bereitstellen einer Anwendung für die faltbare Vorrichtung (1000) basierend auf dem identifizierten Benutzer.

12. Faltbare Vorrichtung (1000) nach Anspruch 11, wobei das eine oder die mehreren Computerprogramme ferner computerausführbare Anweisungen beinhalten, die, wenn durch den einen oder die mehreren Prozessoren (1100) ausgeführt, die faltbare Vorrichtung (1000) zu Folgendem veranlassen:
Erhalten einer Liste von Anwendungen, die in der faltbaren Vorrichtung (1000) gespeichert sind, in Übereinstimmung mit dem identifizierten Benutzer, und wenn die faltbare Vorrichtung (1000) entfaltet ist, Anzeigen der erhaltenen Liste von Anwendungen.

13. Faltbare Vorrichtung (1000) nach Anspruch 11 oder 12, wobei das eine oder die mehreren Computerprogramme ferner computerausführbare Anweisungen beinhalten, die, wenn durch den einen oder die mehreren Prozessoren (1100) ausgeführt, die faltbare Vorrichtung (1000) veranlassen, Ausführung von einigen aus einer Vielzahl von Anwendungen basierend auf dem identifizierten Benutzer einzuschränken.

14. Faltbare Vorrichtung (1000) nach einem der Ansprüche 11 bis 14, wobei der zumindest eine Prozessor (1100) ferner dazu konfiguriert ist, als Reaktion auf das Empfangen einer Benutzereingabe zum Entfalten der faltbaren Vorrichtung (1000) basierend auf Sensorwerten von dem Motionssensor (1500) der faltbaren Vorrichtung (1000) zu bestimmen, ob der Benutzer, der die faltbare Vorrichtung (1000) entfaltet hat, einer von dem zumindest einen Benutzer ist, der bei der faltbaren Vorrichtung (1000) registriert ist, und die faltbare Vorrichtung (1000) als Reaktion auf das Bestimmen, dass der Benutzer, der die faltbare Vorrichtung (1000) entfaltet hat, einer von dem zumindest einen Benutzer ist, der bei der faltbaren Vorrichtung (1000) registriert ist, zu entsperren.

15. Nichtflüchtiges computerlesbares Speichermedium (1400), das computerausführbare Anweisungen speichert, die, wenn durch einen oder mehrere Prozessoren (1100) einer faltbaren Vorrichtung (1000) ausgeführt, die faltbare Vorrichtung (1000) veranlassen, Betriebe nach einem der Ansprüche 1 bis 10 durchzuführen.

## Revendications

1. Procédé, réalisé par un dispositif pliable (1000), d'exécution d'une application, le procédé comprenant :
la réception d'une entrée d'utilisateur pour déplier le dispositif pliable (1000) (S210) ;
en réponse à la réception de l'entrée d'utilisateur pour déplier le dispositif pliable (1000), l'identification, en fonction de valeurs de capteur provenant d'un capteur de mouvement (1500) du dispositif pliable (1000), d'un utilisateur qui a déplié le dispositif pliable (1000) parmi au moins un utilisateur enregistré auprès du dispositif pliable (1000) (S220) ; et
la fourniture d'une application pour le dispositif pliable (1000) en fonction de l'utilisateur identifié (S230).

2. Procédé selon la revendication 1, dans lequel la fourniture de l'application pour le dispositif pliable (1000) en fonction de l'utilisateur identifié comprend :
l'obtention d'une liste d'applications stockées dans le dispositif pliable (1000) en correspondance avec l'utilisateur identifié ; et
lorsque le dispositif pliable (1000) est déplié, l'affichage de la liste d'applications obtenue.

3. Procédé selon la revendication 1 ou 2, dans lequel la fourniture de l'application pour le dispositif pliable (1000) en fonction de l'utilisateur identifié comprend la restriction d'exécution de certaines d'une pluralité d'applications en fonction de l'utilisateur identifié.

4. Procédé selon l'une quelconque des revendications 1 à 3, comprenant en outre :
la réception d'une entrée d'utilisateur pour afficher une pluralité de contenus ;
la détermination du contenu correspondant à l'utilisateur identifié parmi la pluralité de contenus ; et
l'affichage du contenu déterminé.

5. Procédé selon l'une quelconque des revendications 1 à 4, comprenant en outre :
en réponse à la réception d'une entrée d'utilisateur pour déplier le dispositif pliable, la détermination, en fonction de valeurs de capteur provenant du capteur de mouvement (1500) du dispositif pliable, si l'utilisateur qui a déplié le dispositif pliable est l'un de l'au moins un utilisateur enregistré auprès du dispositif pliable (S710) ; et
le déverrouillage du dispositif pliable en réponse à la détermination que l'utilisateur qui a déplié le dispositif pliable est l'un de l'au moins un utilisateur enregistré auprès du dispositif pliable (S720).

6. Procédé selon l'une quelconque des revendications 1 à 5, comprenant en outre :
en réponse à la réception de l'entrée d'utilisateur pour déplier le dispositif pliable (1000), l'identification d'un état de mouvement de l'utilisateur en fonction des valeurs de capteur provenant du capteur de mouvement (1500) du dispositif pliable (1000) (S910) ;
l'obtention d'une image d'exécution d'au moins une application correspondant à l'état de mouvement de l'utilisateur (S920) ; et
l'affichage, lorsque le dispositif pliable (1000) est déplié, de l'image d'exécution obtenue de l'au moins une application avec une liste d'applications (S930).

7. Procédé selon la revendication 6, dans lequel l'état de mouvement comprend un état dans lequel l'utilisateur est debout (1110), un état dans lequel l'utilisateur est couché (1120), et un état dans lequel l'utilisateur marche (1130).

8. Procédé selon l'une quelconque des revendications 1 à 7, comprenant en outre :
l'identification d'une pose et d'un placement du dispositif pliable (1000) en fonction de valeurs de capteur provenant du capteur de mouvement (1500) (S1210) ; et
la modification d'une application affichée en fonction de la pose et du placement identifiés du dispositif pliable (1000) (S1220).

9. Procédé selon l'une quelconque des revendications 1 à 8, comprenant en outre :
en réponse à la réception de l'entrée d'utilisateur pour déplier le dispositif pliable (1000), la détermination, en fonction des valeurs de capteur provenant du capteur de mouvement (1500) du dispositif pliable (1000), si l'utilisateur qui a déplié le dispositif pliable (1000) est un utilisateur enregistré auprès du dispositif pliable (1000) (S1410) ;
l'affichage, en réponse à la détermination que l'utilisateur qui a déplié le dispositif pliable (1000) n'est pas un utilisateur enregistré auprès du dispositif pliable (1000), d'une page d'entrée d'informations d'authentification demandant s'il faut établir une connexion de communication à courte portée avec un dispositif à proximité (S1420) ; et
en réponse à la réception d'une entrée d'utilisateur pour l'établissement de la connexion de communication à courte portée avec le dispositif à proximité via la page d'entrée d'informations d'authentification, la diffusion d'un paquet publicitaire demandant la connexion de communication à courte portée au dispositif à proximité (S1430).

10. Procédé selon l'une quelconque des revendications 1 à 9, dans lequel
l'identification de, en fonction des valeurs de capteur provenant du capteur de mouvement du dispositif pliable (1000), l'utilisateur qui a déplié le dispositif pliable (1000) parmi l'au moins un utilisateur enregistré auprès du dispositif pliable (1000) comprend :
le calcul de valeurs de caractéristique de mouvement du dispositif pliable (1000) en fonction des valeurs de capteur provenant du capteur de mouvement (1500) lorsque le dispositif pliable (1000) est déplié ; et
l'identification d'un utilisateur, qui est sorti par un modèle d'intelligence artificielle (AI) pré-entraîné en entrant les caractéristiques de mouvement calculées en tant que valeurs d'entrée au modèle d'AI pré-entraîné, comme étant l'utilisateur qui a déplié le dispositif pliable (1000).

11. Dispositif pliable (1000) comprenant :
un capteur de mouvement (1500) ;
une mémoire (1400) stockant un ou plusieurs programmes informatiques ; et
un ou plusieurs processeurs (1100) couplés en communication au capteur de mouvement et à la mémoire (1400),
dans lequel l'un ou plusieurs programmes informatiques comprennent des instructions exécutables par ordinateur qui, lorsqu'elles sont exécutées par l'un ou plusieurs processeurs (1100), amènent le dispositif pliable (1000) à :
recevoir, via le capteur de mouvement (1500), une entrée d'utilisateur pour déplier le dispositif pliable (1000), en réponse à la réception de l'entrée d'utilisateur pour déplier le dispositif pliable (1000), identifier, en fonction des valeurs de capteur provenant du capteur de mouvement (1500) du dispositif pliable (1000), un utilisateur qui a déplié le dispositif pliable (1000) parmi au moins un utilisateur enregistré auprès du dispositif pliable (1000), et
fournir une application pour le dispositif pliable (1000) en fonction de l'utilisateur identifié.

12. Dispositif pliable (1000) selon la revendication 11, dans lequel l'un ou plusieurs programmes informatiques comprennent en outre des instructions exécutables par ordinateur qui, lorsqu'elles sont exécutées par l'un ou plusieurs processeurs (1100), amènent le dispositif pliable (1000) à :
obtenir une liste d'applications stockées dans le dispositif pliable (1000) en correspondance avec l'utilisateur identifié, et lorsque le dispositif pliable (1000) est déplié, afficher la liste d'applications obtenue.

13. Dispositif pliable (1000) selon la revendication 11 ou 12, dans lequel l'un ou plusieurs programmes informatiques comprennent en outre des instructions exécutables par ordinateur qui, lorsqu'elles sont exécutées par l'un ou plusieurs processeurs (1100), amènent le dispositif pliable (1000) à restreindre l'exécution de certaines d'une pluralité d'applications en fonction de l'utilisateur identifié.

14. Dispositif pliable (1000) selon l'une quelconque des revendications 11 à 14, dans lequel l'au moins un processeur (1100) est en outre configuré pour, en réponse à la réception d'une entrée d'utilisateur pour déplier le dispositif pliable (1000), déterminer, en fonction de valeurs de capteur provenant du capteur de mouvement (1500) du dispositif pliable (1000), si l'utilisateur qui a déplié le dispositif pliable (1000) est l'un de l'au moins un utilisateur enregistré auprès du dispositif pliable (1000), et déverrouiller le dispositif pliable (1000) en réponse à la détermination que l'utilisateur qui a déplié le dispositif pliable (1000) est l'un de l'au moins un utilisateur enregistré auprès du dispositif pliable (1000).

15. Support de stockage lisible par ordinateur non transitoire (1400) stockant des instructions exécutables par ordinateur qui, lorsqu'elles sont exécutées par un ou plusieurs processeurs (1100) d'un dispositif pliable (1000), amènent le dispositif pliable (1000) à effectuer des opérations selon l'une quelconque des revendications 1 à 10.
